# DEMANDE DE BREVET EUROPEEN

(11) **EP 0 567 052 A1**
(43) Date de publication de la demande: **27.10.1993**
(21) Numéro de dépôt: 93106341.6
(22) Date de dépôt: 20.04.1993
(51) Int. Cl.: B23K 15/00, E01B 11/50

(54) **Procédé pour assembler une bande de roulement en acier en carbone et une bande de roulement en acier au manganèse**

(30) Priorité: 22.04.1992 LU 88105
(71) Demandeur: LES ACIERIES DE LA MEUSE S.A., B-4602 Cheratte (BE); LES ACIERIES DE HAINE ST-PIERRE ET LESQUIN S.A., B-7100 Haine St-Pierre (BE); Thomas, Jacques, B-4130 Esneux (BE); S.A. JADOT GEAP INTERNATIONAL, B-7970 Beloeil (BE)
(72) Inventeur: Thomas, Jacques, B-4130 Esneux (BE); Leriche, Guy, B-4031 Angleur (BE); Bogaerts, Emile, B-7100 La Louvière (BE); Jadot, Etienne, B-7900 Leuze-en-Hainaut (BE)
(74) Mandataire: Freylinger, Ernest T.

(57) **Abrégé**

On présente un procédé pour assembler de façon continue une première bande de roulement (34) en acier au carbone à une deuxième bande de roulement (40) réalisée en acier au manganèse. A cette fin on effectue un joint de soudure (50) par faisceau à électrons entre les deux matériaux, de façon que ce joint s'étende sur la plus grande partie de sa longueur en direction des bandes de roulement (34, 40) à assembler. Ce procédé s'applique avantageusement pour souder des rails à un coeur d'un appareil de voie.

## Description

La présente invention concerne un procédé pour assembler da façon continue une bande de roulement en acier en carbone et une bande de roulement en acier au manganèse.

L'assemblage de pièces en acier au carbone à des pièces en acier à teneur élevée de manganèse est par exemple connu dans la construction d'appareils de voie de chemin de fer, de tram et de métro. Dans ces appareils de voie on est confronté au problème de relier un coeur d'appareil de voie coulé en acier Hadfield, qui contient normalement de 12 à 14% de manganèse, à un rail ordinaire en acier au carbone. Le coeur en acier Hadfield s'est en effet largement imposé dans la confection des appareils de voie, car il est connu que cet acier a pour cette utilisation des qualités mécaniques quasi optimales.

Il est aussi connu que la réduction des joints créant une discontinuité du point de vue conditions de roulement, est un objectif primordial non seulement en ce qui concerne l'assemblage de rails courants, mais aussi en ce qui concerne leur assemblage à des appareils de voie.

Or, si ce problème d'assemblage continu des rails entre eux est aujourd'hui bien maîtrisé grâce aux techniques de soudage bout à bout, par exemple par l'aluminothermie, tel n'est pas le cas pour l'assemblage en continu des rails ordinaires en acier au carbone et des coeurs d'appareils de voie en acier Hadfield.

La raison en est qu'un jointage par soudure directe entre l'acier au carbone et l'acier au manganèse semble à priori impossible. D'un côté, on sait que l'acier au carbone des rails doit être préchauffé avant soudage et refroidi lentement après le soudage, pour que la zone affectée thermiquement ne devienne fragile par autotrempage. De l'autre côté, on sait que l'acier au manganèse est très sensible au grossissement des grains ainsi qu'à la précipitation de carbures, et que ces phénomènes, qui conduisent à une mauvaise résistance aux chocs, sont d'autant plus marqués que l'apport calorifique avant ou lors du soudage est important, et que le refroidissement après soudage est lent. Les exigences de soudage de ces deux matériaux sont donc à priori mutuellement incompatibles.

Pour pouvoir réaliser quand même une continuité de roulement entre le rail en acier au carbone et le coeur en acier au manganèse, il est connu de remplacer l'assemblage traditionnel par éclisses et boulons par des procédés de soudages indirects entre l'acier du rail et l'acier Hadfield du coeur.

Un tel procédé est par exemple décrit dans le brevet d'invention belge No 869776. Dans ce brevet on décrit un procédé pour assembler par soudage un coeur de croisement réalisé en un acier dur austénitique au manganèse à un rail réalisé en acier au carbone. On utilise à cet effet une pièce intermédiaire en acier austénitique de faible teneur en carbone qui est soudée par étincelage au rail en acier au carbone. Dans un second processus de soudage, réalisé lui aussi par étincelage, le coeur de croisement en acier dur au manganèse est alors soudé à ladite pièce intermédiaire, en veillant d'avoir un refroidissement plus rapide que celui qui se produit après le premier processus de soudage.

Ce procédé a cependant les désavantages de devoir effectuer deux joints de soudures pour réaliser une seule jonction rail/coeur et d'entraîner une nette discontinuité dans la bande de roulement de la pièce assemblée. En effet, même si les deux soudures sont aujourd'hui seulement distantes d'une dizaine de millimètres, il ne peut être négligé que la pièce intermédiaire constitue inévitablement une zone de faible résistance à l'usure, ce qui n'est pas souhaitable pour des raisons de sécurité et des raisons de confort de roulement. De plus, il est connu que cette technique nécessite un équipement de soudage coûteux.

La présente invention a pour objet de proposer un procédé pour assembler de façon continue une première bande de roulement réalisée en acier au carbone à une deuxième bande de roulement réalisée en acier au manganèse, par lequel on évite toute discontinuité dans la transition de la première bande de roulement à la deuxième bande de roulement.

Selon la présente invention ce problème est résolu en ce que l'on effectue par faisceau à électrons un joint de soudure direct entre l'acier au carbone et l'acier au manganèse et en ce que ce joint de soudure entre lesdits bandes de roulement est réalisé de façon à s'étendre sur la plus grande partie de sa longueur en direction longitudinale des bandes de roulement à assembler.

Contrairement à ce que l'on pouvait escompter, la présente invention établit qu'on peut souder directement de l'acier au carbone à de l'acier Hadfield, ayant une teneur en manganèse entre 12 et 14%, et obtenir quand même d'excellentes propriétés de résistance mécanique et plus spécialement de résistance à la fatigue.

Selon la présente invention on utilise à cet effet une machine à souder à faisceau à électrons connu en soi. Le soudage par faisceau à électrons permet, grâce à sa forte densité de puissance, de réaliser une fusion homogène sous vide avec un apport de chaleur beaucoup plus faible et beaucoup plus localisé que dans les procédés classiques, tels que par exemple le soudage à électrode enrobée, le soudage sous poudre, le soudage sous gaz inerte etc.

Le procédé de soudage par faisceau à électrons permet effectivement d'optimiser les paramètres de soudage pour avoir l'apport calorifique optimal qui fait éviter les phénomènes de grossissement de grains dans la zone affectée thermiquement, ainsi que les précipitations de carbure aux joints de grains. Par ailleurs, la très faible zone fondue occasionnée par le faisceau d'électrons présente l'avantage de réduire considérablement les contraintes résiduelles de recristallisation et par conséquent d'éviter le phénomène de microfissuration sous tension, largement préjudiciable à une bonne tenue en fatigue.

Le procédé de la présente invention permet en effet de maintenir l'acier Hadfield aussi froid que possible pour éviter la formation de précipitations de carbure aux joints de grains et l'acier à rail aussi chaud que possible pour éviter une trop forte formation de martensite, et ceci sans avoir recours à une pièce intermédiaire.

Des essais standards de flexion et de fatigue, effectués sur des barreaux 15x15x200 mm, ont confirmé qu'il était possible d'ajuster les paramètres de soudage de façon que les propriétés mécaniques requises par les sociétés de chemins de fer soient satisfaites par les jonctions soudées entre acier à rail et acier au manganèse, réalisées dans lesdits barreaux.

Ces essais ont d'ailleurs montré que la réussite de cette jonction dépend essentiellement du cycle thermique de refroidissement après soudage. Celui-ci doit absolument être tel que le passage à 300°C se fasse avec un gradient de température maximal de 20°C/minute pour atteindre les meilleures caractéristiques dans les essais de flexion et de fatigue prescrits par les sociétés de chemin de fer.

Ces essais ont aussi montré qu'un préchauffage des deux pièces à assembler, à des températures de préférence entre 150°C et 350°C, a une influence favorable sur les caractéristiques mécaniques. En effet, dans l'essai de flexion on constate une nette progression de la flèche avant rupture lorsque le temps de préchauffage augmente. Cela signifie que ce préchauffage ne provoque pas de précipitation de carbure fragilisant aux joints des grains.

Ces essais ont d'ailleurs été avantageusement confirmés pour des aciers Hadfield ayant différentes compositions chimiques, allant de l'acier 12/14% Mn standard (c'est-à-dire selon UIC 866-0) jusqu'à des aciers 12/14% Mn modifiés par action sur les pourcentages respectifs en C/Mn et par ajoute de Mo (p.ex.: 1,3 à 1,8% de Mo).

Une extrapolation de ces essais sur une jonction bout à bout acier rail-acier Hadfield dans un profil de rail n'a cependant pas donné satisfaction. On n'a en effet pas réussi à déterminer pour un rail, dont la section transversale a une géométrie relativement complexe, un cycle de soudage optimal qui permet d'obtenir ledit gradient de température maximal dans le joint de 20°C/min au passage de 300°C, indispensable pour atteindre les caractéristiques mécaniques souhaitées.

Selon la présente invention le joint de soudure pour assembler une première bande de roulement réalisée en acier au carbone et une deuxième bande de roulement réalisée en acier au manganèse est en conséquence réalisée de façon à s'étendre sur la plus grande partie de sa longueur en direction longitudinale des deux bandes de roulement à assembler.

Par rapport au soudage bout à bout, où le joint de soudure s'étend en direction transversale des bandes à assembler, la configuration proposée du joint a l'avantage de présenter, même pour des sections transversales compliquées, une section rectangulaire à profondeur constante. La région périphérique autour du joint a de plus, du point de vue répartition du flux calorifique, des caractéristiques constantes sur quasi toute la longueur du joint. Ceci a entre autre l'avantage que le joint peut être soudé en une seule fois, sans interruption et sans devoir changer les paramètres de soudage, et que le refroidissement le long du joint se fait de façon quasi homogène. Des mesures ont ainsi prouvé que l'évolution de la température lors du soudage et lors du refroidissement de la soudure était quasi uniforme sur toute la longueur du joint.

Par ailleurs, les deux pièces à souder ne doivent pas être tournées autour de leur axe longitudinal lors du processus de soudage afin que le faisceau d'électrons puisse pénétrer complètement dans le joint sur tout son tracé, comme c'était le cas dans la soudure bout à bout. On peut ainsi utiliser des chambres à vide de dimensions plus petites et sans mécaniques complexes, et on n'a pas besoin de définir des cycles de soudage compliqués.

Il sera apprécié que la présente technique de soudage a par rapport au soudage par étincelage avec une pièce intermédiaire, technique décrite ci-avant, l'avantage d'une stricte continuité des propriétés mécaniques de la jonction. Il n'y a en effet plus de matière intermédiaire "sandwich" qui est de résistance nettement moindre que l'acier à rail. Le joint selon l'invention a par contre une structure très fine, à peine perceptible dans la surface de roulement.

Il résulte de la configuration du joint que le passage de la roue de la première bande de roulement vers la deuxième bande de roulement se fait de façon très graduelle et évolutive et non de façon abrupte comme c'est le cas dans les soudures bout à bout. Le joint entre les deux bandes de roulement n'est en conséquence sollicité que progressivement lors du passage de la roue, ce qui a un effet favorable sur les conditions de fatigue auxquelles le joint est soumis. De plus, les contraintes sont réparties sur une plus grande section soudée ce qui entraîne une contrainte spécifique plus faible dans le joint soudé.

Le joint selon la présente invention est de préférence concrétisé par un joint situé dans un plan perpendiculaire à la bande de roulement qui fait avec l'axe de roulement un angle bien inférieur à 90° et qui peut même descendre endessous de 5°. Ce joint peut être soit rectiligne sur toute sa longueur, soit représenter une forme de "S" ou de "Z" allongés et légèrement obliques.

Cette dernière forme de joint garantit que la partie centrale du joint est bien orientée dans la direction des bandes de roulement et que les deux extrémités du joint sont orientées de façon à laisser suffisamment de matière de part et d'autre du joint.

Selon une autre caractéristique de la présente invention ledit joint de soudure est réalisé de façon à aboutir dans l'épaisseur d'une des deux bandes de roulement à assembler. Ce joint est donc fermé en direction du faisceau, ce qui facilite la réalisation du procédé de soudage au faisceau à électrons.

Si les bandes de roulements à assembler, sont munies respectivement d'un support en acier au carbone et d'un support en acier au manganèse il est avantageux d'effectuer aussi un joint de soudure par faisceau à électrons entre les deux supports. Ce joint s'étend avantageusement sur la plus grande partie de sa longueur en direction longitudinale des deux supports. Le plus souvent il peut être réalisé avantageusement en retournant simplement la pièce à souder de 180° autour de son axe.

Il est évident que ce procédé peut être appliqué avec tous ses avantages à l'assemblage de deux surfaces de roulement faisant partie de pièces à sections transversales plus ou moins complexes. Le plus souvent la première bande de roulement fera cependant partie d'un rail, comprenant un champignon (assimilé à ladite bande de roulement), une âme et un patin (assimilé audit support). Ladite deuxième bande de roulement fera le plus souvent partie d'un coeur d'un appareil de voie ayant une section transversale plus compliquée, qui ne correspond le plus souvent pas à la section du rail.

Dans le cas de soudage d'un rail à un coeur d'appareil de voie, ledit joint de soudure est alors de préférence réalisé verticalement dans l'épaisseur dudit champignon de rail de façon qu'il soit situé dans sa majeur partie à l'aplomb de l'âme.

D'autres caractéristiques et avantages ressortiront d'un exemple d'application du présent procédé, qui est décrit, à titre d'illustration uniquement, sur base des figures ci-annexées, dont:
- la Figure 1 montre dans une vue en perspective un soudage traditionnel d'un rail en acier au carbone à une antenne d'un coeur d'appareil de voie en acier au manganèse;
- la Figure 2 montre dans une vue en plan des bandes de roulement, un assemblage, réalisé selon l'invention d'un rail en acier ou en carbone à une antenne d'un coeur d'appareil de voie en acier au manganèse;
- la Figure 3 montre une coupe schématique dans l'assemblage de la Figure 1 (ligne de coupe A-A).

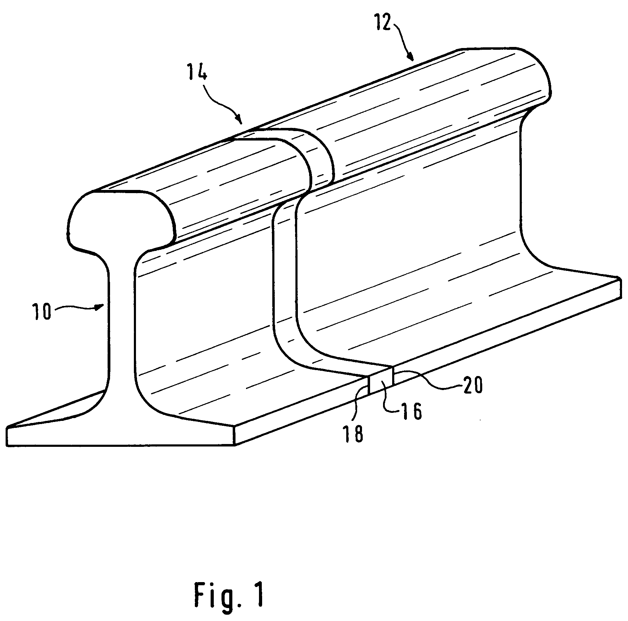

La Figure 1 montre à titre de rappel, un joint de soudure 14 entre un rail au carbone 10 et une antenne 12 d'un coeur d'appareil de voie en acier au manganèse. Le coeur d'appareil de voie lui-même n'est pas représenté pour ne pas alourdir la figure. Le joint de soudure 14 est réalisé de la façon suivante:
On prépare une pièce intermédiaire 16 en un acier austénitique au chrome et au nickel, qui a la section d'un rail et une longueur d'environ 50 mm. On soude cette pièce intermédiaire dans une machine de soudage par étincelage bout à bout au rail 10, ce qui donne lieu à la formation d'un premier joint de soudure 18. Ce joint de soudure est ensuite refroidi lentement en le plaçant par exemple dans une couche de protection calorifique. Ensuite la pièce intermédiaire 16 est coupée à une longueur d'environ 15 mm. On exécute alors le soudage à l'antenne 12 par étincelage ce qui crée un deuxième joint de soudure 20. La Figure 1 fait apparaître qu'entre le rail 10 et l'antenne 12 du coeur il subsiste une discontinuité transversale dans le rail qui a en pratique une épaisseur de 5 à 10 mm.

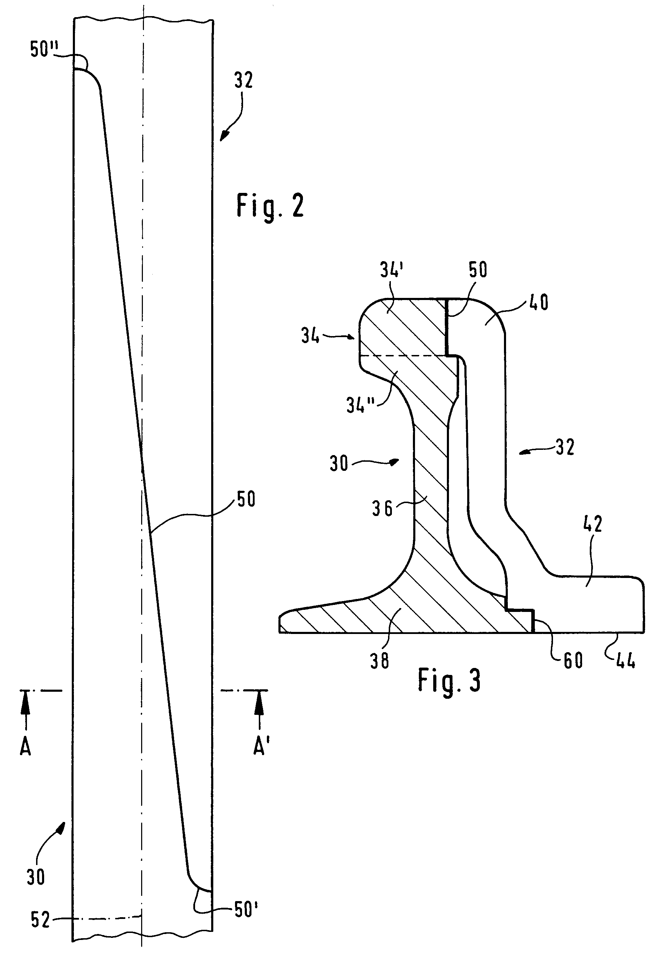

Les Figures 2 et 3 montrent un assemblage réalisé selon l'invention. Comme dans la Figure 1 il s'agit d'un rail ordinaire en acier au carbone 30, qui est soudé à une antenne 32 d'un coeur d'appareil de voie non représenté. Ce coeur d'appareil de voie est réalisé en un acier au manganèse qui a dans cet exemple la composition suivante: C 0,83%; Mn 13,1%; Si 0,62%; S 0,008%; P 0,030%; Ni 0,11% Mo 0,025%; Cu 0,15%.

Sur la Figure 2 on voit que le rail 30 comporte un champignon 34 qui constitue une première bande de roulement, un patin 38 qui constitue un support avec une surface d'appui 44 et une âme 36 qui relie le patin 38 au champignon 34. L'antenne 32 comporte une semelle supérieure 40 qui constitue une deuxième bande de roulement et qui est portée par un pied 42 avec une surface d'appui 44.

Selon la présente invention la bande de roulement 34 du rail 30 est assemblée de façon continue à la bande de roulement 40 de l'antenne 32 du coeur en acier au manganèse par un joint de soudure 50 réalisé de façon à s'étendre sur la plus grande partie de sa longueur en direction longitudinale des deux bandes de roulement 34, 40 à assembler. Sur les Figures 2 et 3 on voit que la majeure partie de la jonction à souder 50 se trouve, dans l'exemple représenté, dans un plan qui est perpendiculaire à une surface continue de roulement qui est constituée par juxtaposition longitudinale des deux bandes de roulement (34 et 40), et que ce plan définit un angle très faible (en pratique environ 3°) avec la ligne médiane repérée par la référence 52.

On remarquera que le joint de soudure s'étend effectivement sur la majorité de sa longueur en direction longitudinale des bandes de roulement 32 et 34. Seulement les tronçons d'extrémités 50' et 50'' du joint 50, qui sont situés au niveau des bords latéraux du champignon assemblé 34, 40, sont orientés en direction transversale desdites bandes 32 et 34, afin de garantir dans cette région une épaisseur suffisante de matière de chaque côté du joint 50. Dans la vue en plan ce joint 50 a sensiblement la forme d'un "S" allongé, si les tronçons 50' et 50'' assurent un raccord arrondi à la partie centrale du joint 50. Ce joint 50 pourrait cependant aussi avoir la forme d'un Z allongé si les tronçons 50' et 50'' étaient simplement des tronçons rectilignes perpendiculaires à ladite direction longitudinale.

On remarquera aussi que le joint 50 aboutit en direction de sa profondeur dans la matière du champignon 34. C'est-à-dire qu'une partie supérieure 34' du champignon est enlevée graduellement pour être remplacée au fur et à mesure par la semelle 40 de l'antenne 32, tandis qu'une partie inférieure 34'' du champignon 34 reste en place et constitue ainsi une contre-surface en-dessous du joint 50, qui est utile pour un soudage au faisceau à électrons.

Un deuxième joint de soudure 60 peut éventuellement être réalisé entre la patin 38 et le pied 42. Celui-ci est de préférence réalisé à partir des surfaces d'appui 44 et 44' en retournant le rail 34 et le coeur de 180° dans la machine à souder. Il s'étend lui aussi en direction longitudinale de l'assemblage et aboutit en direction de sa profondeur de préférence, soit dans la matière du patin 38, soit dans la matière du pied 44.

Selon la présente invention le joint 50, défini d'un côté par le rail 30 en acier au carbone et de l'autre côté par l'antenne 32 du coeur d'appareil de voie en acier au manganèse, était alors soudé dans une machine à souder au faisceau à électrons.

Pour effectuer ce soudage on a d'abord placé le rail et le coeur, dont les surfaces de joint étaient préparées de façon connue en soi, dans un four de préchauffage à une température de 250°C. Puis on a introduit immédiatement les deux pièces dans une chambre à vide d'une machine à souder au faisceau à électrons, où on a chauffé le joint par cinq balayages au faisceau à électrons. Après le cinquième balayage une sonde de température, placée pour cet essais uniquement dans la matière à 2 mm du joint , a détecté une température d'environ 350°C. On a ensuite immédiatement pointé le faisceau d'électrons sur le joint et on a commencé l'opération de soudage. Lorsque le soudage était terminé on a supprimé après vingt secondes le vide dans la chambre et on a laissé refroidir l'assemblage à l'atmosphère à une température ambiante d'environ 20°C. Le gradient de température obtenue au passage de 300°C lors du processus de refroidissement était alors d'environ 20°C/minute ce qui garantit d'excellentes caractéristiques mécaniques sur toute la longueur du joint.

Des essais analogues ont été effectués de façon concluante avec des pièces ayant d'autres sections transversales qui ne correspondent pas nécessairement à la section d'un rail de chemin de fer.

## Revendications

1. Procédé pour assembler de façon continue une première bande de roulement (34) réalisée en acier au carbone à une deuxième bande de roulement (40) réalisée en acier au manganèse, caractérisé en ce que l'on effectue par faisceau à électrons un joint de soudure (50) direct entre l'acier au carbone et l'acier au manganèse et en ce que ce joint de soudure (50) entre lesdites bandes (34, 40) est réalisé de façon à s'étendre sur la plus grande partie de sa longueur en direction longitudinale des bandes de roulement (34, 40) à assembler.

2. Procédé selon la revendication 1, caractérisé en ce que les bandes de roulement (34, 40) assemblées définissent une surface continue de roulement et en ce que le joint de soudure (50) est contenu sur la plus grande partie de sa longueur dans un plan qui est perpendiculaire à cette surface de roulement et qui définit un angle de quelques degrés avec la ligne médiane (52) de cette surface.

3. Procédé selon la revendication 2, caractérisé en ce que ledit joint (50) définit dans ladite surface de roulement une courbe qui a la forme d'un "Z" ou d'un "S" allongés et légèrement obliques.

4. Procédé selon l'une quelconque des revendications 1 à 3 caractérisé en ce que le joint de soudure (50) est réalisé de façon à aboutir en direction de sa profondeur dans l'épaisseur d'une des deux bandes de roulement (34, 40) à assembler.

5. Procédé selon l'une quelconque des revendications 1 à 4, caractérisé en ce que la première bande de roulement (34) et la deuxième bande de roulement (40) sont munies respectivement d'un support en acier au carbone (38) et d'un support en acier au manganèse (42) et en ce que l'on effectue par faisceau à électrons un joint de soudure (60) entre le support en acier au carbone (38) et le support en acier au manganèse (42) qui s'étend sur la plus grande partie de sa longueur en direction longitudinale des deux supports.

6. Procédé selon l'une quelconque des revendications 1 à 5, caractérisé en ce que ladite première bande de roulement (34) fait partie d'un rail (30) et en ce que ladite deuxième bande de roulement (40) fait partie du coeur d'un appareil de voie (32).

7. Procédé selon la revendication 6, caractérisé en ce que ledit rail (30) comporte un champignon (34), une âme (36) et un patin (38) et en ce que le joint de soudure (50) audit coeur (32) est réalisé verticalement, dans l'épaisseur dudit champignon (34) dans sa majeure partie à l'aplomb de l'âme (36).

8. Procédé selon l'une quelconque des revendications 1 à 7, caractérisé en ce que l'on préchauffe le joint à souder avec le faisceau d'électrons.

9. Procédé selon l'une quelconque des revendications 1 à 8, caractérisé en ce que l'on soumet les éléments à souder à un préchauffage entre 150 et 350 °C avant de les souder par ledit faisceau d'électrons.

10. Procédé selon l'une quelconque des revendications 1 à 9, caractérisé par une vitesse de refroidissement maximale de 20°C/minute lors du passage à 300°C après soudage.

11. Appareil de voie comprenant au moins une bande de roulement en acier au manganèse et une bande de roulement en acier au carbone, caractérisé par un joint de soudure entre la bande de roulement en acier au manganèse et une bande de roulement en acier au carbone qui s'étend sur la plus grande partie de sa longueur en direction longitudinale des bandes de roulements assemblées.

12. Appareil de voie selon la revendication 11, caractérisée en ce que la bande de roulement en acier au carbone fait partie d'un rail et la bande de roulement en acier au manganèse fait partie d'un coeur d'appareil de voie.
